(19) **Europäisches Patentamt**
**European Patent Office**
**Office européen des brevets**

(11) **EP 3 254 799 B1**

(12) **EUROPEAN PATENT SPECIFICATION**

(45) Date of publication and mention
of the grant of the patent:
**31.07.2019 Bulletin 2019/31**

(51) Int Cl.:
**B23K 35/362** *(2006.01)* **B23K 35/36** *(2006.01)*
**C22C 38/02** *(2006.01)* **C22C 38/04** *(2006.01)*

(21) Application number: **16746400.7**

(22) Date of filing: **18.01.2016**

(86) International application number:
**PCT/JP2016/051239**

(87) International publication number:
**WO 2016/125569 (11.08.2016 Gazette 2016/32)**

(54) **FLUX FOR SUBMERGED ARC WELDING**

FLUSSMITTEL FÜR UNTERPULVERLICHTBOGENSCHWEISSEN

FLUX POUR SOUDAGE À L'ARC SUBMERGÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.02.2015 JP 2015018805**

(43) Date of publication of application:
**13.12.2017 Bulletin 2017/50**

(73) Proprietor: **Kabushiki Kaisha Kobe Seiko Sho
(Kobe Steel, Ltd.)
Kobe-shi, Hyogo 651-8585 (JP)**

(72) Inventors:
• **TOYODA, Takamasa
Fujisawa-shi
Kanagawa 251-8551 (JP)**
• **SUENAGA, Kazuyuki
Fujisawa-shi
Kanagawa 251-8551 (JP)**

(74) Representative: **Müller-Boré & Partner
Patentanwälte PartG mbB
Friedenheimer Brücke 21
80639 München (DE)**

(56) References cited:
EP-A1- 1 698 428      EP-A1- 1 762 324
WO-A1-2008/072835     JP-A- S5 458 643
JP-A- S6 123 597      JP-A- S6 268 695
JP-A- H02 290 692     JP-A- H02 290 692
JP-A- S50 139 043     JP-A- S51 109 244
JP-A- S52 101 642     JP-A- S56 126 079
JP-A- S61 180 694     JP-A- S62 197 296
JP-A- S62 240 195     JP-A- 2000 263 284
JP-A- 2005 329 462    JP-A- 2006 239 772
JP-A- 2007 268 548    JP-A- 2007 268 548

• **Charles A Natalie ET AL: "PHYSICAL AND
CHEMICAL BEHAVIOR OF WELDING FLUXES I
Colorado 8040 l", Ann. Rev. Mater. Sci, 1 January
1986 (1986-01-01), pages 389-413, XP055482710,
Retrieved from the Internet:
URL:https://www.annualreviews.org/doi/pdf/
10.1146/annurev.ms.16.080186.002133 [retrieved
on 2018-06-08]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to fluxes for submerged arc welding.

Background Art

Fluxes for submerged arc welding are mainly classified into a fused flux and a sintered flux in terms of the form of flux. The fused flux is manufactured by fusing various raw materials in an electric furnace or the like and then crushing them. Meanwhile, the sintered flux is manufactured by bonding various raw materials together with a binder, such as alkaline silicate, granulating them, and then sintering the granules.

The sintered fluxes are classified, depending on the sintering temperature, into a low-temperature sintered flux produced by sintering at a temperature of 400°C or higher and lower than 600°C and a high-temperature sintered flux produced by sintering at a temperature between 600°C and 1,200°C. Conventionally, in high-speed welding of a butt joint, the fused flux having a low melting temperature is generally used to achieve a good bead appearance. Although such a fused flux is not suitable for welding at high heat inputs because of its low melting temperature, a technique is established to refine the particle size of the flux for the purpose of reducing blowing out and improving shieldability. However, the flux containing a large amount of fine particle size is inferior in a resistance to undercut. Further, since such a flux is swirled up into the air to become deposited dust during conveyance of the flux before welding or in dispersal and recovery during welding, a welding work environment is degraded. When a welding operator suck the dust, adverse effects on the human body are concerned.

For this reason, various studies have been conducted on the sintered flux for high-speed submerged arc welding.

For example, Patent Document 1 discloses a technique regarding a sintered flux for high-speed submerged arc welding, particularly, the technique regarding the sintered flux that enables high-speed welding in a multiple-electrode submerged arc welding and can produce a weld metal with high toughness.

The sintered flux for high-speed submerged arc welding disclosed in Patent Document 1 includes, as main components: $SiO_2$: 12 to 24%; $TiO_2$: 9 to 20%; $Al_2O_3$: 15 to 25%; MnO: 8 to 15%; MgO: 18 to 25%; CaO: 1 to 13%; $CaF_2$: 10 to 20%; and FeO: 2% or less. In this flux, the amount of gas generated by thermal decomposition of the above-mentioned flux during welding is 1.5 to 3%, and the flux consists of the above-mentioned main components, gas components and inevitable impurities. Furthermore, in a flux cumulative particle size distribution, particles occupying 50% by mass have a median diameter in a range of 500 to 800 $\mu$m; particles having a particle size of 295 $\mu$m or less in the flux is 15% or less of the whole particles; and a bulk specific gravity of the flux is in a range of 0.7 to 1.2 g/cm$^3$.

For example, Patent Document 2 discloses a technique regarding a sintered flux for high-speed submerged arc welding, particularly, the technique regarding the sintered flux that enables high-speed welding in a multiple-electrode submerged arc welding and can achieve the high toughness by decreasing the amount of oxygen in the weld metal.

The sintered flux for high-speed submerged arc welding disclosed in Patent Document 2 includes, as main components: $SiO_2$: 12 to 24%; $TiO_2$: 1 to 6%; $Al_2O_3$: 15 to 25%; MnO: 6% or less; MgO: 25 to 40%; CaO: 1 to 13%; $CaF_2$: 15 to 28%; and FeO: 2% or less. In this flux, the amount of gas generated by thermal decomposition of the above-mentioned flux during welding is 1.5 to 3%, and the flux consists of the above-mentioned main components, gas components and inevitable impurities. Furthermore, in a flux cumulative particle size distribution, particles occupying 50% by mass have a median diameter in a range of 500 to 800 $\mu$m; particles having a particle size of 295 $\mu$m or less in the flux is 15% or less of the whole particles; and a bulk specific gravity of the flux is in a range of 0.7 to 1.2 g/cm$^3$.

Patent Document 3 discloses a firing type flux for submerged arc welding.

Prior Art Document

Patent Document

Patent Document 1: JP S59-137194 A
Patent Document 2: JP S60-64792 A
Patent Document 3: JP S50-139043 A

Summary of the Invention

Problems to be Solved by the Invention

However, in Patent Document 1, three-electrode welding is performed at a welding speed of 200 cm/min, and this speed is not said to be high, compared to a welding speed that can be achieved by the fused flux.
In Patent Document 2, three-electrode welding is performed at a welding speed of 160 cm/min, and this speed is not said to be high, compared to a welding speed that can be achieved by the fused flux.
Furthermore, the sintered flux for high-speed submerged arc welding is also required to have excellent resistance to defects of the weld metal.
Accordingly, it is an object of the present invention to provide a flux for submerged arc welding that has good welding workability at high speed and good resistance to defects of the weld metal.

Means for Solving the Problems

A high-temperature sintered flux for submerged arc welding according to claim 1.
With this arrangement, the flux contains predetermined amounts of specific components and thereby has good welding workability at high speed and good resistance to defects of the weld metal.
Note that high speed as used herein means a welding speed in a range of, for example, 210 to 600 cm/min. Furthermore, welding workability as used herein means the quality of the bead appearance and bead shape, the slag removability, and the quality of the arc stability.
The flux for submerged arc welding preferably further includes: CaO as a corresponding value: 18% by mass or less (not including 0% by mass).
With this arrangement, the cleaning degree of weld metal and the fluidity of molten slag are improved.
The flux for submerged arc welding preferably further includes: $TiO_2$: 6% by mass or less (not including 0% by mass).
With this arrangement, the welding workability and the toughness of the weld metal are improved.
The flux for submerged arc welding satisfies the following numerical expression (I), where $[Al_2O_3]$ is the $Al_2O_3$ content, $[TiO_2]$ is the $TiO_2$ content, and $[ZrO_2]$ is the $ZrO_2$ content.
[Equation 1]

$$0.01 \leqq \frac{[ZrO_2]}{[Al_2O_3] + [TiO_2] + [ZrO_2]} \leqq 0.38 \qquad \cdot \cdot \cdot \quad ( I )$$

With this arrangement, the above-mentioned respective components are contained in the predetermined amounts and, additionally, are controlled more strictly, thereby the welding workability is further improved.
The flux for submerged arc welding preferably further includes: $B_2O_3$: 3% by mass or less (not including 0% by mass) .
With this arrangement, the toughness of the weld metal is improved.
The flux for submerged arc welding according to the present invention is suitable for use as the high-temperature sintered flux that is subjected to a welding work at high speed.
The flux for submerged arc welding preferably satisfies one or both of particles with a particle size of 0.3 mm or less being 10% by mass or less and particles with a particle size of 0.2 mm or less being 3% by mass or less.
With this arrangement, the welding workability and the resistance to defects of a weld metal are enhanced, and the welding environment is improved.

Effects of the Invention

According to the present invention, the contents of the respective components are specified, thereby the welding workability at high speed and the resistance to defects of the weld metal are improved.

Brief Description of the Drawings

Fig. 1 is a side view showing the shape of a groove in a test specimen used in a welding test in Examples.

Fig. 2 is a side view showing the arrangement of electrodes in a welding test in Examples.

Mode for Carrying Out the Invention

Embodiments for carrying out the present invention will be described in detail below. Note that the present invention is not limited to the embodiments described below.

A high-temperature sintered flux for submerged arc welding according to the embodiment of the present invention (hereinafter simply referred to as a flux) defines a F content (in terms of $CaF_2$) ; a MgO content; a total content of a Na content (in terms of $Na_2O$) and a K content (in terms of $K_2O$) ; a Mn content (in terms of MnO) ; a Fe content (in terms of FeO) ; a $SiO_2$ content; an $Al_2O_3$ content; a $ZrO_2$ content; and a water-soluble $SiO_2$ content.

The flux according to the embodiment of the present invention may further contain at least one of CaO (corresponding value) , $TiO_2$ and $B_2O_3$. When the flux contains these components, their contents are preferably set at predetermined values.

The reason for restricting the composition of the flux in the present embodiment will be described below. Note that the content of each component in the flux of the present embodiment is a value obtained by converting a value quantified by a method defined by JIS Z 3352:2010, in terms of oxide or fluoride, unless otherwise specified. The content of each component is its content relative to the entire flux. Furthermore, in the flux of the present embodiment, the measurement of the particle size distribution is also in accordance with JIS Z 3352:2010.

[F in terms of $CaF_2$: 2 to 22% by mass]

A fluoride, such as $CaF_2$, has the effect of enhancing the electric conductivity and the fluidity of a molten slag, and is one of components that affect the high-temperature viscosity of the molten slag. This function is proportional to its content, like CaO to be mentioned later. Specifically, when the F content (in terms of $CaF_2$) is less than 2% by mass, the above-mentioned effect cannot be sufficiently exhibited and it cannot also be expected to exhibit another effect of promoting exhaust of CO gas from the molten slag to improve resistance to pockmark.

Meanwhile, when the F content (in terms of $CaF_2$) exceeds 22% by mass, the fluidity of the molten slag becomes excessively high, thereby the bead shape is degraded. Thus, the F content (in terms of $CaF_2$) is set at 2 to 22% by mass. From the perspective of improving the resistance to pockmark, the F content (in terms of $CaF_2$) is preferably 4% by mass or more, and more preferably 6% by mass or more. From the perspective of improving the bead shape, the F content (in terms of $CaF_2$) is preferably 20% by mass or less, and more preferably 18% by mass or less.

Note that F content as used herein means a value obtained by expressing, in terms of $CaF_2$, the whole F content in the flux that is determined by analysis with the method defined by JIS Z 3352:2010 (e.g., JIS K 1468-2:1999 and the like). The fluoride component in the flux of the present embodiment is mainly $CaF_2$, but sometimes includes $AlF_3$, $MgF_2$ or the like, in addition thereto. However, these do not affect the effects of the fluoride, mentioned above, as long as the F content (the whole amount of F in terms of $CaF_2$) is set in the above-mentioned range.

[MgO: 8 to 28% by mass]

MgO is a component that significantly contributes to improving the slag removability, and thus is essential for ensuring the good slag removability regardless of the type of a welding power source. However, when the MgO content is less than 8% by mass, the effect of MgO cannot be sufficiently obtained. Meanwhile, when the MgO content exceeds 28% by mass, the bead shape is degraded, and defects, such as slag inclusions, lack of fusion and further undercuts, are more likely to occur, depending on the type of the welding power source. In particular, in an alternating current welding power source, the welding defects, such as the slag inclusions and the lack of fusion, mentioned above, occur remarkably. Therefore, the MgO content is set at 8 to 28% by mass.

From the perspective of improving the slag removability, the MgO content is preferably 10% by mass or more, and more preferably 12% by mass or more. From the perspective of suppressing the occurrence rate of the defects, the MgO content is preferably 26% by mass or less, and more preferably 24% by mass or less.

Note that MgO content as used herein means a value obtained by expressing, in terms of MgO, the whole Mg content in the flux that is determined by analysis with the method defined by JIS Z 3352:2010 (e.g., JIS M 8222:1997 and the like). The whole Mg content measured by this method sometimes contains components other than MgO, such as $MgF_2$. However, the contents of the components are very little. Thus, these components do not affect the effects of MgO, mentioned above, as long as the MgO content (the whole amount of Mg in terms of MgO) is set in the above-mentioned range.

[Total of at least one or more of Na in terms of $Na_2O$ and K in terms of $K_2O$: 0.5 to 6.5% by mass]

(i.e., a total of Na in terms of $Na_2O$ and K in terms of $K_2O$: 0.5 to 6.5% by mass (including at least one or more elements of Na and K))

Na and K are components that mainly affect the arc stability during welding and the moisture-absorption properties of the flux, and are added, mainly in the form of oxide, such as $Na_2O$ and $K_2O$. However, when the total of the Na content (in terms of $Na_2O$) and the K content (in terms of $K_2O$) is less than 0.5% by mass, the arc voltage during welding becomes unstable, thus the bead appearance and the bead shape are degraded.

Meanwhile, when the total of the Na content (in terms of $Na_2O$) and the K content (in terms of $K_2O$) exceeds 6.5% by mass, the moisture-absorption properties of the flux are degraded, and the arc becomes extremely strong and thereby unstable, thus the bead appearance and the bead shape are degraded. Thus, the total of the Na content (in terms of $Na_2O$) and the K content (in terms of $K_2O$) is set within a range of 0.5 to 6.5% by mass. Note that in the flux of the present embodiment, at least one element of Na and K may be added.

From the perspective of stabilizing the arc voltage, the total of the Na content (in terms of $Na_2O$) and the K content (in terms of $K_2O$) is preferably 1% by mass or more, and more preferably 1.5% by mass or more. From the perspective of the moisture-absorption properties of the flux and the arc stability, the total of the Na content (in terms of $Na_2O$) and the K content (in terms of $K_2O$) is preferably 6% by mass or less, and more preferably 5.5% by mass or less.

Note that Na content and K content as used herein mean values obtained by expressing, in terms of NaO and $K_2O$ respectively, the whole Na content and the whole K content in the flux that are determined by analysis with the method defined by JIS Z 3352:2010 (e.g., JIS M 8852:1998 and the like). The Na component and the K component of the flux in the present embodiment are mainly $Na_2O$ and $K_2O$, respectively, but additionally sometimes include $NaAlSi_3O_8$, $KAlSi_3O_8$ and the like.

Here, Na and K are derived from mineral raw materials or liquid glass.

[Mn in terms of MnO: 2 to 22% by mass]

Mn is a component that affects the viscosity and solidification temperature of the molten slag and which is effective in improving the resistance to pockmark. Mn is added, mainly in the form of oxide, such as MnO, $MnO_2$ and $Mn_2O_3$. Among these various forms, particularly, the addition of Mn in the form of manganese monoxide (MnO) exhibits its effectiveness. When the Mn content (in terms of MnO) is less than 2% by mass, its effects cannot be sufficiently exhibited. Meanwhile, when the Mn content exceeds 22% by mass, the slag becomes fragile, and the slag removability is degraded. Thus, the Mn content (in terms of MnO) is set at 2 to 22% by mass.

From the perspective of improving the resistance to pockmark, the Mn content (in terms of MnO) is preferably 4% by mass or more, and more preferably 6% by mass or more. From the perspective of improving the slag removability, the Mn content (in terms of MnO) is preferably 20% by mass or less, and more preferably 18% by mass or less. Note that Mn content as used herein means a value obtained by expressing, in terms of MnO, the whole Mn content in the flux that is determined by analysis with the method defined by JIS Z 3352:2010 (e.g., JIS M 8232:2005 and the like).

[Fe in terms of FeO: 0.5 to 6.5% by mass]

Fe has the effect of promoting a deoxidation phenomenon to enhance the resistance to pockmark, and is added, mainly in the form of metal powder such as Fe-Si. The above-mentioned effect is proportional to the amount of presence of Fe. When the Fe content (in terms of FeO) is less than 0.5% by mass, particularly, in the use of a direct current welding power source, the effect cannot be sufficiently obtained. On the other hand, the Fe content (in terms of FeO) exceeding 6.5% by mass affects the solidification temperature of the slag, thus the bead appearance, the bead shape and the slag removability are degraded. Therefore, the Fe content (in terms of FeO) is set at 0.5 to 6.5% by mass.

From the perspective of the resistance to pockmark, the Fe content (in terms of FeO) is preferably 1% by mass or more, and more preferably 1.5% by mass or more. When the influence of a slag on the solidification temperature is taken into consideration, the Fe content (in terms of FeO) is preferably 6% by mass or less, and more preferably 5.5% by mass or less.

Note that Fe content as used herein means a value obtained by expressing, in terms of FeO, the whole Fe content in the flux that is determined by analysis with the method defined by JIS Z 3352:2010 (e.g., JIS M 8202:2000 and the like). The Fe content sometimes includes, in addition to Fe added as the metal powder, the contents of FeO, $Fe_2O_3$, $Fe_3O_4$ and the like, that are added as inevitable impurities.

[SiO$_2$: 12 to 32% by mass]

SiO$_2$ has the effect of mainly making the bead appearance and the bead shape better by imparting the appropriate viscosity to the molten slag. When the SiO$_2$ content is less than 12% by mass, however, the above-mentioned effect is not sufficiently obtained, thus the bead appearance and bead shape are degraded. Meanwhile, when the SiO$_2$ content exceeds 32% by mass, which is excessive, the slag removability is degraded, and seizure of the slags becomes severe. Therefore, the SiO$_2$ content is set at 12 to 32% by mass.

From the perspective of improving the bead appearance and the bead shape, the SiO$_2$ content is preferably 14% by mass or more, and more preferably 16% by mass or more. From the perspective of the slag removability, the SiO$_2$ content is preferably 30% by mass or less, and more preferably 28% by mass or less.

Note that SiO$_2$ content as used herein means a value obtained by converting the whole Si content in the flux that is determined by analysis with the method defined by JIS Z 3352: 2010 (e.g. , JIS M 8214:1995 and the like) to SiO$_2$. The whole Si content measured by this method contains components other than SiO$_2$, such as Si added as a component of an alloy of Fe-Si and the like. However, these components do not affect the effects of SiO$_2$, mentioned above, as long as the SiO$_2$ content (the whole amount of Si in terms of SiO$_2$) is set in the above-mentioned range.

[Al$_2$O$_3$: 16 to 36% by mass]

Al$_2$O$_3$ is a component for adjusting the viscosity and melting point of molten slag and has the effect of making the bead shape better during welding. However, when the Al$_2$O$_3$ content is less than 16% by mass, the above-mentioned effect cannot be sufficiently obtained. Meanwhile, when the Al$_2$O$_3$ content exceeds 36% by mass, the melting point of the molten slag is raised excessively high, and degradation of the bead shape during welding occurs. Therefore, the Al$_2$O$_3$ content is set at 16 to 36% by mass.

From the perspective of adjusting the viscosity and melting point of the molten slag, the Al$_2$O$_3$ content is preferably 18% by mass or more, and more preferably 20% by mass or more. From the perspective of the melting point of the molten slag, the Al$_2$O$_3$ content is preferably 34% by mass or less, and more preferably 32% by mass or less. This can further make the bead shape better.

Note that Al$_2$O$_3$ content as used herein means a value obtained by expressing, in terms of Al$_2$O$_3$, the whole Al content in the flux that is determined by analysis with a method defined by JIS Z 3352:2010 (e.g., JIS M 8220:1995 and the like). The whole Al content measured by this method sometimes contains components other than Al$_2$O$_3$, such as AlF$_3$. However, the contents of these components are very little. Thus, the components do not affect the effects of Al$_2$O$_3$, mentioned above, as long as the Al$_2$O$_3$ content (the whole amount of Al in terms of Al$_2$O$_3$) is set in the above-mentioned range.

[ZrO$_2$: 0.4 to 10% by mass]

ZrO$_2$ is a very important component to obtain arc stability in high-speed welding, good bead shape and bead appearance, and good slag removability while affecting the viscosity and solidification temperature of a molten slag. When the ZrO$_2$ content is less than 0.4% by mass, the effect cannot be obtained. On the other hand, when the ZrO$_2$ content exceeds 10% by mass, the bead shape is degraded. Therefore, the ZrO$_2$ content is set at 0.4 to 10% by mass.

From the perspective of improving the arc stability, the bead appearance, the bead shape and the slag removability, the ZrO$_2$ content is preferably 0.7% by mass or more, and more preferably 1% by mass or more. From the perspective of the bead shape, the ZrO$_2$ content is preferably 9% by mass or less, and more preferably 8% by mass or less.

[Water-soluble SiO$_2$:less than 1% by mass (including 0% by mass)]

When the water-soluble SiO$_2$ content is 1% by mass or more, the welding workability at high speed and the resistance to defects of a weld metal are degraded. Thus, the water-soluble SiO$_2$ content is restricted to less than 1% by mass (including 0% by mass) . From the perspective of the welding workability at high speed and the resistance to defects of the weld metal, the water-soluble SiO$_2$ content is preferably 0.9% by mass or less, and more preferably 0.8% by mass or less.

The water-soluble SiO$_2$ is derived mainly from a binding agent, such as liquid glass. To reduce its content, it is effective to sinter the flux at a temperature equal to or higher than a temperature at which the binding agent is changed to be water-insoluble. Specifically, it is particularly preferable that the sintering temperature is set at 700°C or higher. The water-soluble SiO$_2$ content can be controlled mainly by adjusting the sintering temperature.

The water-soluble SiO$_2$ content in the flux can be measured by the following method. First, the flux is crushed into a particle size of 300 $\mu$m or less by a vibrational mill, followed by sampling about 0.2 g of a specimen for measurement therefrom (step 1). Then, the above-mentioned specimen and 100 ml of distilled water are charged into a conical flask made of quartz, and boiled for 4 hours, thereby soluble components are extracted (step 2). After leaving the extracted solution for 12 hours or more, precipitates, floating substances and the like in the extracted solution are removed, and then the Si content is quantified by an absorption photometry (step 3).

Note that water-soluble $SiO_2$ as used herein means a value obtained by expressing, in terms of $SiO_2$, the whole Si content in the flux determined by analysis using the method mentioned above, but the water-soluble $SiO_2$ is discriminated from the above-mentioned whole $SiO_2$ and its content is specified.

[CaO as a corresponding value: 18% by mass or less (not including 0% by mass)]

The flux of the present embodiment may contain CaO, in addition to the components mentioned above. CaO is a component that increases the basicity of the slag, thereby the cleaning degree of weld metal is enhanced, and also affects the fluidity of the molten slag. CaO exhibits the above-mentioned effects in proportion to the amount of presence of CaO. When the CaO content is 18% by mass or less, the fluidity of the molten slag becomes lower, and the bead appearance and shape are further improved. Therefore, when CaO is added, the CaO content is preferably set at 18% by mass or less (not including 0% by mass). From the perspective of the bead appearance and shape, the CaO content is more preferably 16% by mass or less, and further preferably 14% by mass or less. The lower limit of the CaO content is not particularly limited, but is preferably 0.1% by mass or more from the perspective of improving the cleaning degree of the weld metal.

Note that the flux in the present embodiment includes, as a Ca component, $CaF_2$ mentioned above, in addition to CaO. For this reason, CaO content as used herein means a corresponding value determined from the whole Ca content and the whole F content that are obtained by analysis with the method defined by JIS Z 3352:2010. Thus, if the $CaF_2$ content is very large, according to JIS Z 3352:2010, the CaO content can be 0 in some cases.

[$TiO_2$: 6% by mass or less (not including 0% by mass)]

The flux of the present embodiment may contain $TiO_2$, in addition to the components mentioned above. $TiO_2$ is a component that is effective in improving the slag removability and also has the effect of making the bead shape better. A part of $TiO_2$ is converted into Ti by a reduction reaction during welding, and then the Ti is added into the weld metal, thereby contributing to improving the toughness of the flux.

The above-mentioned function is proportional to the amount of presence of $TiO_2$ ($TiO_2$ content) . When the $TiO_2$ content is 6% by mass or less, the bead shape is further improved. Thus, when $TiO_2$ is added, the $TiO_2$ content is preferably 6% by mass or less (not including 0% by mass) . From the perspective of the bead shape, the $TiO_2$ content is more preferably 5% by mass or less, and further preferably 4% by mass or less. The lower limit of the $TiO_2$ content is not particularly limited, but is preferably 0.1% by mass or more from the perspective of the slag removability and the bead shape.

Note that $TiO_2$ content as used herein means a value obtained by expressing, in terms of $TiO_2$, the whole Ti content in the flux that is determined by analysis with the method defined by JIS Z 3352:2010 (e.g., JIS M 8219-1:2012 and the like).

The flux satisfies the following numerical expression (I), where [$Al_2O_3$] is the $Al_2O_3$ content (% by mass), [$TiO_2$] is the $TiO_2$ content (% by mass), and [$ZrO_2$] is the $ZrO_2$ content (% by mass).

[Equation 2]

$$0.01 \leqq \frac{[ZrO_2]}{[Al_2O_3] + [TiO_2] + [ZrO_2]} \leqq 0.38 \quad \cdot \cdot \cdot \quad (\mathrm{I})$$

The respective contents of $Al_2O_3$, $TiO_2$ and $ZrO_2$ are individually specified. Furthermore, the flux of the present embodiment also specifies the ratio of the $ZrO_2$ content to the total content of the $Al_2O_3$ content, the $TiO_2$ content and the $ZrO_2$ content (= [$ZrO_2$] / ([$Al_2O_3$] + [$TiO_2$] + [$ZrO_2$] ) ) .

The inventors have studied by various experiments about the welding workability at high speed of the fluxe with $ZrO_2$ added, and as a result, found out that the ratio of the $ZrO_2$ content to the total content of the $Al_2O_3$ content, the $TiO_2$ content and the $ZrO_2$ content (= [$ZrO_2$] / ([$Al_2O_3$] + [$TiO_2$] + [$ZrO_2$])) affects the welding workability at high speed.

When [$ZrO_2$] / ([$Al_2O_3$] + [$TiO_2$] + [$ZrO_2$] ) is 0.01 or more, the effect exhibited by the addition of $ZrO_2$ is more likely to be sufficiently obtained. Meanwhile, when [$ZrO_2$] / ([$Al_2O_3$] + [$TiO_2$] + [$ZrO_2$]) is 0.38 or less, the slag solidification temperature does not become extremely high, and the bead appearance and the slag removability are easily improved. Thus, the amount of each component added is adjusted such that [$ZrO_2$] / ([$Al_2O_3$] + [$TiO_2$] + [$ZrO_2$]) is in a range of 0.01 to 0.38.

From the perspective of further enhancing the effect exhibited by the addition of $ZrO_2$, $[ZrO_2]/([Al_2O_3] + [TiO_2] + [ZrO_2])$ is more preferably 0.02 or more, and further preferably 0.03 or more. From the perspective of the bead appearance and the slag removability, $[ZrO_2]/([Al_2O_3] + [TiO_2] + [ZrO_2])$ is more preferably 0.33 or less, and further preferably 0.28 or less.

Note that when the flux does not contain $TiO_2$, $[ZrO_2]/([Al_2O_3] + [ZrO_2])$ is in a range of 0.01 to 0.38 for the same reason as that mentioned above. Furthermore, this numerical expression is determined experimentally.

[$B_2O_3$: 3% by mass or less (not including 0% by mass)]

The flux of the present embodiment may contain $B_2O_3$, which is made from a boron oxide, borax or the like as a raw material, in addition to the components mentioned above. $B_2O_3$ is a component effective in improving the toughness of a weld metal. When the $B_2O_3$ content is 3% by mass or less, the weld metal is less likely to be hardened and toughness is further improved. Thus, when $B_2O_3$ is added, the $B_2O_3$ content is preferably 3% by mass or less (not including 0% by mass). From the perspective of the toughness, the $B_2O_3$ content is more preferably 2% by mass or less, and further preferably 1% by mass or less. The lower limit of the $B_2O_3$ content is not particularly limited, but is preferably 0.01% by mass or more from the perspective of obtaining the effect of improving the toughness.

[Other Components]

Components other than the above-mentioned components in the flux of the present embodiment are inevitable impurities, such as Ba, Li, P and S. Among these inevitable impurities, the content of each of Ba, Li and the like is preferably restricted to 1.0% by mass or less, and particularly, the content of each of P and S, which affect the quality of welding, is preferably restricted to 0.05% by mass or less. The total content of Ba, Li, P, S and the like is preferably 3% by mass or less.

[Flux Particle Size Distribution]

The inventors have studied by various experiments about the welding workability at high speed of the high-temperature sintered fluxes. As a result, the inventors have found out that the occurrence rate of undercuts is significantly reduced by satisfying one or both of a particle size of 0.3 mm or less being 10% by mass or less and a particle size of 0.2 mm or less being 3% by mass or less, and confirmed that in this way the welding work environment is made better. To further reduce undercuts that occur during the high-speed welding and to further improve the welding work environment, the flux for submerged arc welding satisfies one or both of a particle size of 0.3 mm or less being 10% by mass or less and a particle size of 0.2 mm or less being 3% by mass or less. Note that a particle size of 0.3 mm or less and a particle size of 0.2 mm or less may be 0% by mass.

[High-Temperature Sintered Flux]

The composition of the flux of the present embodiment is suitable for use as the high-temperature sintered flux. That is, the flux is preferably obtained by sintering at a temperature between 600°C and 1,200°C.

By sintering at this temperature, the water-soluble $SiO_2$ content can be controlled to be less than 1% by mass.

[Manufacturing Method]

When manufacturing the flux of the present embodiment, for example, raw material powder is blended to have the above-mentioned composition, then mixed and kneaded together with a binding agent, granulated, and sintered. At this time, for example, polyvinyl alcohol or liquid glass can be used as the binding agent (binder). Granulation methods preferably include but are not limited to, methods using a rolling granulator, an extrusion granulator, and the like.

Further, the granulated flux is subjected to particle size regulation such as dust removal and crushing of coarse particles, thereby particles of the flux preferably have a particle size of 2.5 mm or less. On the other hand, the sintering process after the granulation can be performed by a rotary kiln, a stationary batch furnace, a belt baking furnace or the like. The sintering temperature at this time can be set, for example, at 600 to 1,200°C. From the perspective of changing the binding agent to be water-insoluble as mentioned above, the sintering temperature is preferably set at 700°C or higher.

As mentioned above in detail, the flux of the present embodiment sets the contents of each component in the specified range, and thereby can achieve the good welding workability during high-speed welding and good resistance to defects of the weld metal.

Note that the resistance to defects is concerned with defects existing inside the weld metal (slag inclusions, lack of fusion, blowholes and the like) and defects existing at the surface of the weld metal (undercuts, pockmarks, pits and the like). In the present application, the fluidity of the molten slag and the particle size of the flux are controlled, and thereby the flux is effective in the resistance to defects, particularly, undercuts and pockmarks existing at the surface of the weld metal.

The composition of the flux of the present embodiment is a high-temperature sintered flux.

Examples

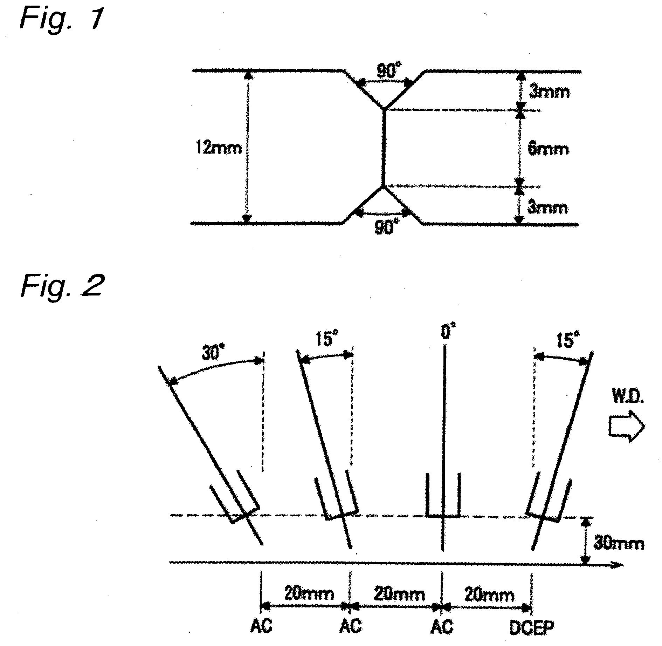

The effects of the present invention will be specifically described by way of Examples of the present invention and Comparative Examples. In these Examples and Comparative Examples, submerged arc welding tests were performed using steel sheets shown in Table 1 below and wires shown in Table 2, by the groove shape shown in Fig. 1 and the electrode arrangement shown in Fig. 2, under welding conditions shown in Table 3 below. The qualities of the fluxes in Examples shown in Table 4 below and in Comparative Examples shown in Table 5 below were evaluated. In Examples and Comparative Examples, raw materials were blended to have the compositions shown in Tables 4 or 5, then mixed and kneaded together with a binding agent (liquid glass), granulated and further sintered using a rotary kiln at the temperature shown in Table 4 or 5 below, followed by the particle size regulation, thereby the fluxes were obtained. Note that in Tables 4 and 5, regarding components not satisfying the ranges specified by the present invention and the preferable ranges, respective numerical values of these components are underlined. To clarify the description, in the figures for reference, the scale of each member, the space or positional relationship between the respective members, or the like may be exaggerated, or the illustration of a part of the member may be omitted.

[Table 1]

| Sheet thickness (mm) | Chemical component (mass%) | | | | |
|---|---|---|---|---|---|
| | C | Si | Mn | P | S |
| 12 | 0.12 | 0.21 | 0.97 | 0.015 | 0.003 |

[Table 2]

| Diameter (mm) | Chemical component (mass%) | | | | |
|---|---|---|---|---|---|
| | C | Si | Mn | P | S |
| 4.0 | 0.11 | 0.25 | 1.08 | 0.013 | 0.008 |

[Table 3]

| | Current (A) | Voltage (V) | Welding speed (cm/min) |
|---|---|---|---|
| L Electrode | 1,050 | 34 | |
| T1 Electrode | 850 | 38 | 250 |
| T2 Electrode | 750 | 40 | |
| T3 Electrode | 650 | 42 | |

[Table 4]

| | No. | Chemical component (mass%) | | | | | | | | | | | | Equation 1 | Sintering temperature (°C) | Particle size distribution (mass%) | |
| | | F in terms of CaF₂ | MgO | Na in terms of Na₂O + K in terms of K₂O | Mn in terms of MnO | Fe in terms of FeO | SiO₂ | Al₂O₃ | ZrO₂ | Water-soluble SiO₂ | CaO | TiO₂ | B₂O₃ | | | 0.3 mm or less | 0.2 mm or less |
|---|---|---|---|---|---|---|---|---|---|---|---|---|---|---|---|---|---|
| Example | F1 | 22 | 11 | 2.0 | 18 | 1.0 | 20 | 18 | 1.8 | 0.9 | 5 | 1 | 0.2 | 0.09 | 750 | 3 | 1 |
| | F2 | 7 | 12 | 3.0 | 14 | 4.0 | 17 | 17 | 4.4 | 0.8 | 18 | 3 | 0.6 | 0.18 | 750 | 7 | 0 |
| | F3 | 8 | 19 | 4.5 | 14 | 0.5 | 20 | 16 | 4 | 0.6 | 11 | 2 | 1 | 0.18 | 800 | 4 | 3 |
| | F4 | 15 | 17 | 4.0 | 22 | 4.0 | 12 | 19 | 3.7 | 0.3 | 2 | 1 | 0.3 | 0.16 | 900 | 7 | 3 |
| | F5 | 3 | 14 | 2.5 | 16 | 6.5 | 23 | 21 | 4 | 0.3 | 5 | 2 | 3 | 0.15 | 900 | 8 | 2 |
| | F6 | 12 | 16 | 6.5 | 13 | 3.5 | 15 | 20 | 2 | <0.1 | 12 | 0 | 0 | 0.09 | 950 | 7 | 0 |
| | F7 | 12 | 18 | 3.5 | 12 | 2.5 | 22 | 23 | 1.6 | 0.4 | 4 | 1 | 0.4 | 0.06 | 850 | 4 | 1 |
| | F8 | 2 | 17 | 0.5 | 15 | 5.0 | 21 | 24 | 3 | 0.3 | 7 | 5 | 0.5 | 0.09 | 900 | 4 | 3 |
| | F9 | 14 | 16 | 4.0 | 12 | 4.6 | 13 | 22 | 0.4 | 0.5 | 8 | 4 | 2 | 0.02 | 850 | 3 | 3 |
| | F10 | 13 | 15 | 3.0 | 2 | 1.0 | 19 | 36 | 2 | 0.5 | 4 | 5 | 0 | 0.05 | 850 | 10 | 0 |
| | F11 | 10 | 28 | 5.0 | 9 | 1.0 | 24 | 18 | 4.9 | 0.7 | 0 | 0 | 0.1 | 0.21 | 800 | 2 | 0 |
| | F12 | 11 | 12 | 2.0 | 9 | 3.0 | 32 | 20 | 2 | 0.4 | 7 | 2 | 0 | 0.08 | 850 | 4 | 1 |
| | F13 | 12 | 13 | 1.0 | 10 | 4.0 | 12 | 16 | 2 | 0.9 | <u>23</u> | 6 | 1 | 0.08 | 750 | 7 | 3 |
| | F14 | 11 | 16 | 2.0 | 10 | 4.0 | 12 | 20 | 5 | 0.7 | 6 | <u>12</u> | 2 | 0.14 | 800 | 2 | 2 |
| | F15 | 4 | 16 | 4.0 | 13 | 4.0 | 15 | 16 | 10 | 0.9 | 11 | 1 | <u>6</u> | 0.37 | 750 | 2 | 1 |
| | F16 | 12 | 12 | 2.0 | 9 | 2.0 | 32 | 16 | 1 | 0.7 | 12 | 2 | 0 | 0.05 | 800 | <u>14</u> | <u>6</u> |
| | F17 | 7 | 8 | 2.0 | 14 | 4.0 | 18 | 28 | 2 | 0.6 | 14 | 3 | 0 | 0.06 | 750 | <u>11</u> | 2 |

[Table 5]

| | No. | Chemical component (mass%) | | | | | | | | | | | | Equation 1 | Sintering temperature (°C) | Particle size distribution (mass%) | |
|---|---|---|---|---|---|---|---|---|---|---|---|---|---|---|---|---|---|
| | | F in terms of $CaF_2$ | MgO | Na in terms of $Na_2O$ + K in terms of $K_2O$ | Mn in terms of MnO | Fe in terms of FeO | $SiO_2$ | $Al_2O_3$ | $ZrO_2$ | Water-soluble $SiO_2$ | CaO | $TiO_2$ | $B_2O_3$ | | | 0.3 mm or less | 0.2 mm or less |
| Comparative Example | F18 | 1 | 25 | 5.5 | 9 | 5.5 | 16 | 24 | 6 | 0.8 | 4 | 2 | 2 | 0.19 | 750 | 3 | 1 |
| | F19 | 27 | 8 | 4.0 | 13 | 1.0 | 17 | 16 | 7.5 | 0.6 | 5 | 1 | 0.5 | 0.31 | 800 | 2 | 1 |
| | F20 | 8 | 6 | 1.5 | 17 | 1.5 | 18 | 24 | 5 | 0.1 | 15 | 2 | 2 | 0.16 | 950 | 6 | 2 |
| | F21 | 9 | 35 | 4.0 | 6 | 2.0 | 12 | 23 | 4.6 | 0.9 | 2 | 2 | 0.4 | 0.16 | 750 | 1 | 1 |
| | F22 | 8 | 25 | 0.0 | 16 | 3.0 | 13 | 24 | 3 | 0.9 | 4 | 3 | 1 | 0.10 | 750 | 5 | 1 |
| | F23 | 12 | 19 | 9.0 | 7 | 1.0 | 21 | 18 | 3.7 | 0.1 | 4 | 5 | 0.3 | 0.14 | 950 | 3 | 2 |
| | F24 | 10 | 17 | 6.5 | 1 | 6.5 | 21 | 23 | 5 | 0.4 | 5 | 3 | 2 | 0.16 | 850 | 4 | 1 |
| | F25 | 6 | 15 | 3.0 | 26 | 4.0 | 14 | 20 | 3 | 0.9 | 5 | 4 | 0 | 0.11 | 750 | 8 | 0 |
| | F26 | 7 | 16 | 3.0 | 17 | 0.0 | 26 | 19 | 2.9 | 0.9 | 5 | 4 | 0.1 | 0.11 | 750 | 7 | |
| | F27 | 6 | 13 | 5.0 | 9 | 10.0 | 18 | 22 | 8 | 0.6 | 6 | 1 | 2 | 0.26 | 800 | 4 | 0 |
| | F28 | 14 | 9 | 5.5 | 12 | 1.5 | 9 | 28 | 8 | <0.1 | 7 | 6 | 0 | 0.19 | 950 | 2 | 0 |
| | F29 | 7 | 17 | 3.0 | 7 | 1.0 | 38 | 16 | 2.2 | 0.9 | 5 | 3 | 0.8 | 0.10 | 750 | 5 | 1 |
| | F30 | 11 | 13 | 3.5 | 17 | 2.5 | 32 | 11 | 6 | 0.7 | 2 | 0 | 2 | 0.35 | 800 | 7 | 2 |
| | F31 | 11 | 9 | 2.0 | 14 | 3.0 | 12 | 38 | 6 | 0.4 | 2 | 1 | 2 | 0.13 | 850 | 4 | 0 |
| | F32 | 3 | 8 | 3.5 | 8 | 3.5 | 26 | 27 | 0 | <0.1 | 17 | 1 | 3 | 0.00 | 950 | 4 | 2 |
| | F33 | 8 | 11 | 5.0 | 7 | 4.0 | 21 | 17 | 21 | 0.5 | 1 | 3 | 2 | 0.51 | 850 | 4 | 2 |
| | F34 | 3 | 21 | 5.5 | 15 | 5.5 | 21 | 24 | 0.4 | 2.0 | 3 | 1 | 0.6 | 0.02 | 550 | 3 | 1 |

Note that the balance of each of the steel sheet composition shown in the above Table 1 and the wire composition shown in the above Table 2 includes Fe and inevitable impurities. "Equation (1)" shown in the above Tables 4 and 5 indicates a value of $[ZrO_2] / ([Al_2O_3] + [TiO_2] + [ZrO_2])$.

The respective fluxes of Examples and Comparative Examples were evaluated for the arc stability, the slag removability, the bead appearance, the bead shape, the undercut occurrence rate and the pockmark occurrence rate.

<Arc Stability>

The arc stability was evaluated based on the amplitudes of current and voltage during welding. Specifically, samples having the welding current of $\pm 50$ A and the arc voltage of $\pm 2$ V were rated "A"; samples having the welding current of $\pm 100$ A and the arc voltage of $\pm 2$ V were rated "B"; samples having the welding current of $\pm 100$ A and the arc voltage of $\pm 4$ V were rated "C"; and samples in which welding was difficult to perform were rated "D". In Examples and Comparative Examples, the samples rated as "A" or "B" were determined to be pass.

<Slag Removability>

The slag removability was evaluated based on the easiness of slag removal and the presence or absence of seizure. Specifically, samples from which the slag was naturally removed with no seizure were rated "A"; samples from which the slag was naturally removed with three or less seizures per unit welding length (1 m) were rated "B"; samples from which the slag was not naturally removed with four to nine seizures per unit welding length (1 m) were rated "C"; and samples from which the slag was not naturally removed with ten or more seizures per unit welding length (1 m) were rated "D". In Examples and Comparative Examples, the samples rated as "A" or "B" were determined to be pass.

<Bead Appearance>

The bead appearance, which is the evaluation mainly relating to the waved shape and glaze of the bead, was evaluated by visually observing a welded part. As a result, samples having beads with metallic glaze without any disturbed part of the bead waved shape were rated "A"; samples having beads with metallic glaze and one disturbed part of the bead waved shape per unit welding length (1 m) were rated "B"; samples having beads without any metallic glaze and with two to four disturbed parts of the bead waved shape per unit welding length (1 m) were rated "C"; and samples having beads without any metallic glaze and with five or more disturbed parts of the bead waved shape per unit welding length (1 m) were rated "D". In Examples and Comparative Examples, the samples rated as "A" or "B" were determined to be pass.

<Bead Shape>

The bead shape, mainly regarding uneven part of the bead and wettability to the base metal, was evaluated by visually observing the welded part. As a result, samples having beads with a very good shape were rated "A"; samples having beads with a good shape were rated "B"; samples having beads with a slightly defective shape were rated "C"; and samples having beads with a defective shape were rated "D". In Examples and Comparative Examples, the samples rated as "A" or "B" were determined to be pass.

<Undercut Occurrence Rate>

Regarding undercuts, samples with no undercut were rated "A"; samples having an undercut occurrence rate per unit welding length (1 m) of 0.5% or less were rated "B"; samples having an undercut occurrence rate per unit welding length (1 m) of more than 0.5% and 1.0% or less were rated "C"; and samples having an undercut occurrence rate per unit welding length (1 m) of more than 1.0% were rated "D". In Examples and Comparative Examples, the samples rated as "A" or "B" were determined to be pass.

<Pockmark Occurrence Rate>

Regarding pockmarks, samples with no pockmark were rated "A"; samples having a pockmark occurrence rate per unit welding length (1 m) of 0.5% or less were rated "B"; samples having a pockmark occurrence rate per unit welding length (1 m) of more than 0.5% and 1.0% or less were rated "C"; and samples having a pockmark occurrence rate per unit welding length (1 m) of more than 1. 0% were rated "D". In Examples and Comparative Examples, the samples rated as "A" or "B" were determined to be pass.

Note that the undercut and the pockmark were visually detected. The occurrence rate per unit welding length (1 m) in evaluation of the undercut and the pockmark was determined by visually measuring the length of each undercut, each pockmark and the like; calculating the total length of undercuts and the total length of pockmarks; and then dividing each of the total length of undercuts and the total length of pockmarks by an effective length of a test section, followed by expression in terms of unit welding length.

The above-mentioned evaluation results are collectively shown in Tables 6 and 7 below.

[Table 6]

| | No. | Arc stability | Slag removability | Bead appearance | Bead shape | Undercut occurrence rate | Pockmark occurrence rate |
|---|---|---|---|---|---|---|---|
| Example | F1 | A | A | A | A | A | A |
| | F2 | A | A | A | A | A | A |
| | F3 | A | A | A | A | A | A |
| | F4 | A | A | A | A | A | A |
| | F5 | A | A | A | A | A | A |
| | F6 | A | A | A | A | A | A |
| | F7 | A | A | A | A | A | A |
| | F8 | A | A | A | A | A | A |
| | F9 | A | A | A | A | A | A |
| | F10 | A | A | A | A | A | A |
| | F11 | A | A | A | A | A | A |
| | F12 | A | A | A | A | A | A |
| | F13 | A | A | B | B | A | A |
| | F14 | A | A | A | B | A | A |
| | F15 | A | A | A | A | A | A |
| | F16 | A | A | A | A | B | A |
| | F17 | A | A | A | A | A | A |

[Table 7]

| | No. | Arc stability | Slag removability | Bead appearance | Bead shape | Undercut occurrence rate | Pockmark occurrence rate |
|---|---|---|---|---|---|---|---|
| Comparative Example | F18 | A | A | A | A | A | C |
| | F19 | A | A | A | C | A | A |
| | F20 | A | C | A | A | A | A |
| | F21 | A | A | A | C | C | A |
| | F22 | C | A | C | C | A | A |
| | F23 | C | A | C | C | A | A |
| | F24 | A | A | A | A | A | C |
| | F25 | A | C | A | A | A | A |
| | F26 | A | A | A | A | A | C |
| | F27 | A | C | C | c | A | A |
| | F28 | A | A | C | C | A | A |
| | F29 | A | D | A | A | A | A |

(continued)

| | No. | Arc stability | Slag removability | Bead appearance | Bead shape | Undercut occurrence rate | Pockmark occurrence rate |
|---|---|---|---|---|---|---|---|
| | F30 | A | A | A | C | A | A |
| | F31 | A | A | A | C | A | A |
| | F32 | C | C | C | C | A | A |
| | F33 | A | A | A | C | A | A |
| | F34 | B | C | C | C | C | B |

The fluxes in Examples Nos. F1 to F17 shown in Table 6 satisfied the scope of the present invention, and thus were excellent in all evaluation items.

Note that in the flux of Example No. F13, since the CaO content exceeded 18% by mass, the bead appearance and the bead shape were rated not "A" but "B".

In the flux of Example No. F14, since the $TiO_2$ content exceeded 6% by mass, the bead shape was rated not "A" but "B".

In the flux of Example No. F15, since the $B_2O_3$ content exceeded 3% by mass, the toughness of the weld metal was considered to be degraded, as compared with the flux having the $B_2O_3$ content of 3% by mass or less.

In the flux of Example No. F16, since the particle size distribution did not satisfy the preferable range, the undercut occurrence rate was rated not "A" but "B".

In the flux of Example No. F17, the particle size distribution of a particle size of 0.3 mm or less did not satisfy the preferable range, while the particle size distribution of a particle size of 0.2 mm or less satisfied the preferable range, and thus this flux was excellent in all evaluation items.

In contrast, the fluxes of Comparative Examples Nos. F18 to F34 shown in Table 7 did not satisfy the scope of the present invention, and thus had the following results.

In the flux of Comparative Example No. F18, since the F content (in terms of $CaF_2$) was less than the lower limit of its specified range, the pockmark occurred.

In the flux of Comparative Example No. F19, the F content (in terms of $CaF_2$) exceeded the upper limit of its specified range, the bead shape was degraded.

In the flux of Comparative Example No. F20, the MgO content was less than the lower limit of its specified range, the slag removability was degraded.

In the flux of Comparative Example No. F21, the MgO content exceeded the upper limit of its specified range, the bead shape was degraded and the undercut occurred.

In the flux of Comparative Example No. F22, the total content of the Na content (in terms of $Na_2O$) and the K content (in terms of $K_2O$) was less than the lower limit of its specified range, the arc stability, the bead appearance and the bead shape were degraded.

In the flux of Comparative Example No. F23, the total content of the Na content (in terms of $Na_2O$) and the K content (in terms of $K_2O$) exceeded the upper limit of its specified range, the arc stability, the bead appearance and the bead shape were degraded.

In the flux of Comparative Example No. F24, since the Mn content (in terms of MnO) was less than the lower limit of its specified range, the pockmark occurred..

In the flux of Comparative Example No. F25, the Mn content (in terms of MnO) exceeded the upper limit of its specified range, the slag removability was degraded.

In the flux of Comparative Example No. F26, since the Fe content (in terms of FeO) was less than the lower limit of its specified range, the pockmark occurred.

In the flux of Comparative Example No. F27, the Fe content (in terms of FeO) exceeded the upper limit of its specified range, the slag removability, the bead appearance and the bead shape were degraded.

In the flux of Comparative Example No. F28, the $SiO_2$ content was less than the lower limit of its specified range, the bead appearance and the bead shape were degraded.

In the flux of Comparative Example No. F29, the $SiO_2$ content exceeded the upper limit of its specified range, the slag removability was degraded.

In the flux of Comparative Example No. F30, the $Al_2O_3$ content was less than the lower limit of its specified range, the bead shape was degraded.

In the flux of Comparative Example No. F31, the $Al_2O_3$ content exceeded the upper limit of its specified range, the bead shape was degraded.

In the flux of Comparative Example No. F32, the $ZrO_2$ content was less than the lower limit of its specified range, the arc stability, the slag removability, the bead appearance and bead shape were degraded.

In the flux of Comparative Example No. F33, the $ZrO_2$ content exceeded the upper limit of its specified range, the bead shape was degraded.

In the flux of Comparative Example No. F34, the water-soluble $SiO_2$ content exceeded the upper limit of its specified range, the slag removability, the bead appearance and the bead shape were degraded, and the undercuts occurred.

As can be seen from the results mentioned above, it is confirmed that the use of the flux according to the present invention can improve the welding workability at high speed and the resistance to defects of the weld metal.

**Claims**

1. A high-temperature sintered flux for submerged arc welding, comprising:

   F: 2 to 22% by mass, as determined in terms of $CaF_2$ by analysis with the method defined by JIS Z3352:2010;
   MgO: 8 to 28% by mass;
   a total of at least one or more of Na in terms of $Na_2O$ and K in terms of $K_2O$: 0.5 to 6.5% by mass;
   Mn: 2 to 22% by mass, as determined in terms of MnO by analysis with the method defined by JIS Z3352:2010;
   Fe: 0.5 to 6.5% by mass, as determined in terms of FeO by analysis with the method defined by JIS Z3352:2010;
   $SiO_2$:12 to 32% by mass;
   $Al_2O_3$: 16 to 36% by mass;
   $ZrO_2$: 0.4 to 10% by mass;
   water-soluble $SiO_2$:less than 1 % by mass including 0% by mass, and optionally, one or more of:

   CaO as a corresponding value: 18% by mass or less,
   $TiO_2$: 6% by mass or less, and
   $B_2O_3$: 3% by mass or less,

   wherein the water-soluble $SiO_2$ content in the flux is determined by the method described in the description, and the content of each of the other components in the flux is its content relative to the entire flux,
   wherein the flux for submerged arc welding satisfies the following numerical expression (I), where $[Al_2O_3]$ is the $Al_2O_3$ content, $[TiO_2]$ is the $TiO_2$ content, and $[ZrO_2]$ is the $ZrO_2$ content.

   [Equation 1]

$$0.01 \leqq \frac{[ZrO_2]}{[Al_2O_3]+[TiO_2]+[ZrO_2]} \leqq 0.38 \quad \cdots \quad (\,I\,)$$

2. The high-temperature sintered flux for submerged arc welding according to claim 1, which satisfies one or both of a particle size of 0.3 mm or less being 10% by mass or less and a particle size of 0.2 mm or less being 3% by mass or less.

**Patentansprüche**

1. Hochtemperatur-Sinterflussmittel zum Unterpulververschweißen, umfassend:

   F: 2 bis 22 Massen-%, bestimmt in Bezug auf $CaF_2$ durch Analyse mit dem in JIS Z3352:2010 definierten Verfahren;
   MgO: 8 bis 28 Massen-%;
   insgesamt mindestens eines oder mehrere von Na in Bezug auf $Na_2O$ und K in Bezug auf $K_2O$: 0,5 bis 6,5 Massen-%;
   Mn: 2 bis 22 Massen-%, bestimmt in Bezug auf MnO durch Analyse mit dem in JIS Z3352:2010 definierten Verfahren;
   Fe: 0,5 bis 6,5 Massen-%, bestimmt in Bezug auf FeO durch Analyse mit dem in JIS Z3352:2010 definierten

Verfahren;

SiO$_2$:12 bis 32 Massen-%;

Al$_2$O$_3$: 16 bis 36 Massen-%;

ZrO$_2$: 0,4 bis 10 Massen-%;

wasserlösliches SiO$_2$:weniger als 1 Massen-%, einschließlich 0 Massen-%, und gegebenenfalls eines oder mehrere von:

   CaO als entsprechender Wert: 18 Massen-% oder weniger,
   TiO$_2$: 6 Massen-% oder weniger und
   B$_2$O$_3$: 3 Massen-% oder weniger,

wobei der wasserlösliche SiO$_2$-Anteil in dem Flussmittel durch das in der Beschreibung beschriebene Verfahren bestimmt wird und der Anteil jeder der anderen Komponenten im Flussmittel ihr Anteil relativ zum gesamten Flussmittel ist,

wobei das Flussmittel zum Unterpulverschweißen den folgenden numerischen Ausdruck (I) erfüllt, wobei [Al$_2$O$_3$] der Al2O3-Anteil ist, [TiO$_2$] der TiO$_2$-Anteil ist und [ZrO$_2$] der ZrO$_2$-Anteil ist.

[Ausdruck 1]

$$0,01 \leqq \frac{[ZrO_2]}{[Al_2O_3] + [TiO_2] + [ZrO_2]} \leqq 0,38 \quad \cdot \cdot \cdot \ ( I )$$

2. Hochtemperatur-Sinterflussmittel zum Unterpulverschweißen nach Anspruch 1, welches eine oder beide von einer Teilchengröße von 0,3 mm oder weniger von 10 Massen-% oder weniger und einer Teilchengröße von 0,2 mm oder weniger von 3 Massen-% oder weniger erfüllt.

**Revendications**

1. Flux fritté haute température pour soudage à l'arc submergé, comprenant:

   F: 2 à 22% en masse, tel que déterminé en termes de CaF$_2$ par analyse avec le procédé défini par JIS Z3352:2010;
   MgO: 8 à 28% en masse;
   un total d'au moins un ou plusieurs de Na en termes de Na$_2$O et K en termes de K$_2$O: 0,5 à 6,5% en masse;
   Mn: 2 à 22% en masse, tel que déterminé en termes de MnO par analyse avec le procédé défini par JIS Z3352:2010;
   Fe: 0,5 à 6,5% en masse, tel que déterminé en termes de FeO par analyse avec le procédé défini par JIS Z3352:2010;
   SiO$_2$: 12 à 32% en masse;
   Al$_2$O3: 16 à 36% en masse;
   ZrO$_2$: 0,4 à 10% en masse;
   du SiO$_2$ soluble dans l'eau: moins d'1% en masse y compris 0% en masse, et
   facultativement, un ou plusieurs de:

   CaO comme valeur correspondante: 18% en masse ou moins,
   TiO$_2$: 6% en masse ou moins, et
   B$_2$O$_3$: 3% en masse ou moins,

   dans lequel la teneur en SiO$_2$ soluble dans l'eau dans le flux est déterminée par le procédé décrit dans la description, et la teneur en chacun des autres composants dans le flux est sa teneur par rapport au flux entier, dans lequel le flux pour soudage à l'arc submergé satisfait à l'expression numérique suivante (I), dans laquelle [Al$_2$O$_3$] est la teneur en Al$_2$O$_3$, [TiO$_2$] est la teneur en TiO$_2$, et [ZrO$_2$] est la teneur en ZrO$_2$.

   [Équation 1]

$$0.01 \leqq \frac{[ZrO_2]}{[Al_2O_3]+[TiO_2]+[ZrO_2]} \leqq 0.38 \quad \cdots \quad (\text{I})$$

2. Flux fritté haute température pour soudage à l'arc submergé selon la revendication 1, lequel satisfait à l'une ou les deux d'une granulométrie de 0,3 mm ou moins, qui est 10% en masse ou moins et d'une granulométrie de 0,2 mm ou moins qui est 3% en masse ou moins.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S59137194 A
- JP S6064792 A
- JP S50139043 A